# EUROPEAN PATENT APPLICATION

(11) **EP 4 535 056 A1**
(43) Date of publication of application: **09.04.2025**
(21) Application number: 23816112.9
(22) Date of filing: 31.05.2023
(51) Int. Cl.: G02B 6/44, G02B 6/032

(54) **OPTICAL FIBER RIBBON**

(30) Priority: 31.05.2022 JP 2022088640
(71) Applicant: SUMITOMO ELECTRIC INDUSTRIES, LTD., Osaka-shi, Osaka 541-0041 (JP)
(72) Inventor: SATO Fumiaki, Osaka-shi, Osaka 541-0041 (JP); SHIMODA Yuuki, Osaka-shi, Osaka 541-0041 (JP)
(74) Representative: Müller-Boré & Partner Patentanwälte PartG mbB
(86) International application number: PCT/JP2023/020298
(87) International publication number: WO 2023/234355

(57) **Abstract**

An optical fiber ribbon that comprises a plurality of optical fiber core wires including a core and cladding, wherein the cores are formed from pure quartz or as a hollow core, the plurality of optical fiber core wires are arranged in parallel and the adjacent optical fiber core wires are connected to each other, and the difference between the maximum value and the minimum value of the propagation time of light in the plurality of optical fiber core wires is 0.1% or less of the average value of the propagation time of light in the optical fiber core wires.

## Description

### TECHNICAL FIELD

The present disclosure relates to an optical fiber ribbon.

The present application claims priority based on Japanese Patent Application No. 2022-088640 filed on May 31, 2022, and incorporates all the contents described in the Japanese Application.

In the related art, there has been developed an optical fiber for reducing skew among cores included in each of a plurality of optical fibers or among a plurality of cores included in the same optical fiber. For example, Patent Literature 1 discloses a multi-core optical fiber in which skew among signal lights propagating through a plurality of cores is 1 ps/m or less, and a transmission constant difference between two cores adjacent to each other among the plurality of cores is larger than zero.

### CITATION LIST

### PATENT LITERATURE

Patent Literature 1: JP2013-228548A

### SUMMARY OF INVENTION

An optical fiber ribbon according to the present disclosure includes a plurality of optical fibers each including a core and cladding, in which the core is formed of pure quartz or formed as a hollow core, the optical fibers arranged in parallel and adjacent to each other are coupled to each other, and a difference between a maximum value and a minimum value of light transmission time in the plurality of optical fibers is 0.1% or less of an average value of the light transmission time in the optical fibers.

### BRIEF DESCRIPTION OF DRAWINGS

[FIG. 1] FIG. 1 is a diagram illustrating an example of an optical fiber ribbon according to an embodiment of the present disclosure.
[FIG. 2] FIG. 2 is a diagram illustrating a configuration of an optical fiber illustrated in FIG. 1.
[FIG. 3] FIG. 3 is a diagram illustrating an example of a modification of the optical fiber ribbon according to the embodiment of the present disclosure.
[FIG. 4] FIG. 4 is a diagram illustrating an example of an optical cable using the optical fiber ribbon illustrated in FIG. 3.
[FIG. 5] FIG. 5 is a diagram illustrating an example of a modification of the optical fiber according to the embodiment of the present disclosure.
[FIG. 6] FIG. 6 is a diagram illustrating an example of another modification of the optical fiber according to the embodiment of the present disclosure.
[FIG. 7] FIG. 7 is a diagram illustrating an example of another modification of the optical fiber according to the embodiment of the present disclosure.
[FIG. 8] FIG. 8 is a diagram illustrating an outline of a measurement system used for measuring a difference in light transmission time among the optical fibers.
[FIG. 9] FIG. 9 is a diagram illustrating a list of measurement targets and measurement results of measurement using the measurement system illustrated in FIG. 8.

### TECHNICAL PROBLEM

In order to further improve the performance of the optical fiber ribbon, there is a demand for a technique capable of further reducing skew among cores and increasing a light transmission speed in the cores.

An object of the present disclosure is to provide an optical fiber ribbon capable of further reducing skew among cores and increasing a light transmission speed in the cores.

### ADVANTAGEOUS EFFECTS OF INVENTION

According to the present disclosure, it is possible to further reduce the skew among the cores and to increase the light transmission speed in the cores.

### SOLUTION TO PROBLEM

First, an embodiment of the present disclosure will be listed and described.

An optical fiber ribbon according to the embodiment of the present disclosure includes
(1) a plurality of optical fibers each including a core and cladding, in which
   the core is formed of pure quartz or formed as a hollow core,
   the optical fibers arranged in parallel and adjacent to each other are coupled to each other, and
   a difference between a maximum value and a minimum value of light transmission time in the plurality of optical fibers is 0.1% or less of an average value of the light transmission time in the optical fibers.
   When such a form of the optical fiber ribbon is adopted, the optical fibers are coupled to one another, and therefore, it is possible to reduce a difference in length of the plurality of optical fibers included in the optical fiber ribbon. In addition, the core is made of pure quartz or hollow, so that a difference in relative refractive index among the cores can be made smaller (to substantially zero). Therefore, it is possible to further reduce the skew among the cores. In addition, the core is formed of pure quartz or formed as a hollow core, so that the core does not contain impurities, and therefore, the light transmission speed can be increased. Therefore, it is possible to further reduce the skew among the cores and to increase the light transmission speed in the cores.
(2) In the optical fiber ribbon according to (1),
   the difference may be 0.05% or less of the average value.
   With such a configuration, it is possible to further reduce the skew among the cores.
(3) In the optical fiber ribbon according to (1) or (2),
   the plurality of optical fibers adjacent to each other may be intermittently bonded.
   With such a configuration, the optical fiber ribbon can be made more flexible, rounded, and bundled, and an optical fiber ribbon that is easy to route can be implemented.
(4) In the optical fiber ribbon according to any of (1) to (3),
   each of the optical fibers may include a plurality of the cores.
   With such a configuration of the multi-core fiber, the lengths of the cores are the same, and therefore, the difference in length of the cores can be reduced (to substantially zero) and the transmission amount can be increased.
(5) In the optical fiber ribbon according to any of (1) to (4),
   the optical fiber may have an outer diameter of 200 µm or less, and
   the cladding of the optical fiber may have an outer diameter of 100 µm or less.

With such a configuration, it is possible to provide an optical fiber ribbon which implements high density, is easy to route, and is hardly bent and broken.

### DESCRIPTION OF EMBODIMENTS

A specific example of an optical fiber ribbon according to the present disclosure will be described below with reference to the drawings. The present disclosure is not limited to these exemplifications, but is indicated by the scope of claims, and is intended to include all modifications within a scope and meaning equivalent to the scope of claims.

### (Overall Configuration)

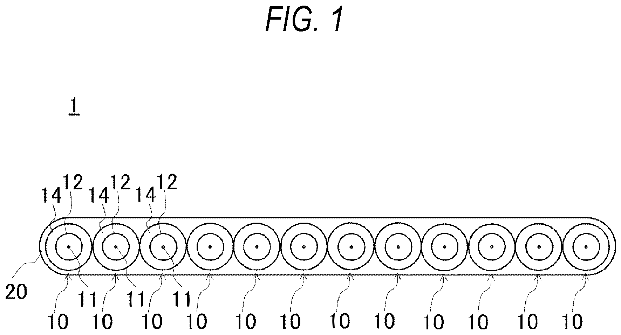

FIG. 1 is a diagram illustrating an example of an optical fiber ribbon according to an embodiment of the present disclosure. With reference to FIG. 1, an optical fiber ribbon 1 according to the embodiment of the present disclosure includes a plurality of optical fibers 10 and a coupling member 20 configured to couple the plurality of optical fibers 10. In the example illustrated in FIG. 1, the optical fiber ribbon 1 includes twelve optical fibers 10. The coupling member 20 covers the entire twelve optical fibers 10 so that the adjacent optical fibers 10 arranged in parallel are coupled to each other.

Each of the optical fibers 10 is, for example, a single core fiber (SCF), and includes one core 11, cladding 12 covering the core 11, and a coating layer 14 covering the cladding 12. The core 11 has a refractive index higher than a refractive index of the cladding 12 and is configured to guide light. The coating layer 14 includes, for example, two layers of an ultraviolet curable resin layer and a colored layer.

More specifically, the core 11 is formed of pure quartz. As an addition amount of a dopant in the core 11 decreases, the light transmission speed increases. Therefore, when the core 11 is formed of pure quartz as described above, the light transmission speed can be increased compared to the case where a material of the core 11 includes a material other than quartz such as germanium. In addition, when the core 11 does not contain a dopant, it is possible to substantially eliminate variations in the addition amount of dopant, and therefore, it is easy to make the light transmission speed uniform.

The twelve cores 11 and the cladding 12 in the optical fiber ribbon 1 are formed using the same preform. Accordingly, it is possible to reduce the difference in refractive index among the twelve optical fibers 10 and to reduce the skew which is the difference in the light transmission speed.

Further, when the twelve optical fibers 10 are formed as the optical fiber ribbon 1, the tension of the plurality of optical fibers 10 is controlled to be equal. Hereinafter, control such that the tension becomes equal to a set value is referred to as "tension control". By performing such tension control, the difference in the lengths of the twelve optical fibers 10 included in the same optical fiber ribbon 1 can be suppressed, and as a result, the skew can be further reduced.

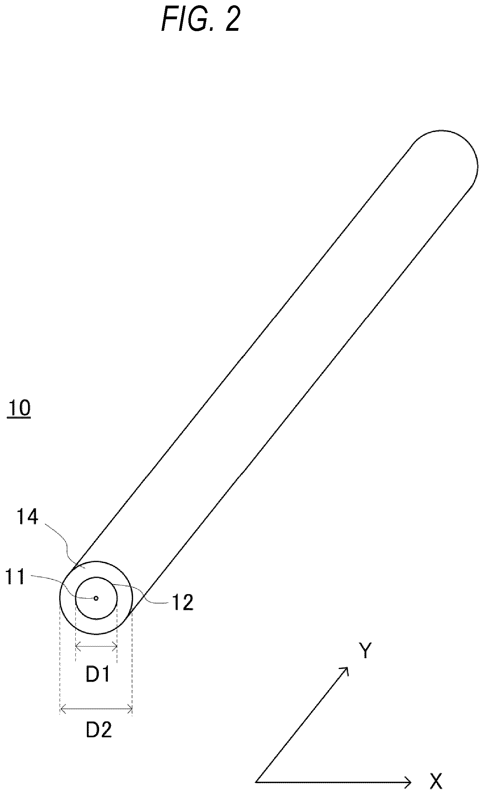

FIG. 2 is a diagram illustrating a configuration of the optical fiber 10 illustrated in FIG. 1. In FIG. 2, an outer diameter D1 of the cladding 12 is formed to be, for example, 100 µm or less. By reducing a cladding diameter (glass diameter of optical fiber), it is possible to suppress breakage due to bending. An outer diameter D2 of the optical fiber 10 is formed to be, for example, 200 µm or less. With such a configuration, the density of the optical fiber 10 can be increased.

The optical fiber ribbon 1 is not limited to a configuration including twelve optical fibers 10, and may include, for example, twenty-four optical fibers 10 or four optical fibers 10.

The coupling member 20 is not limited to the configuration covering the entire twelve optical fibers 10 as illustrated in FIG. 1, and may be a configuration coupling a part of the optical fibers 10 adjacent to each other, for example.

### (First Modification)

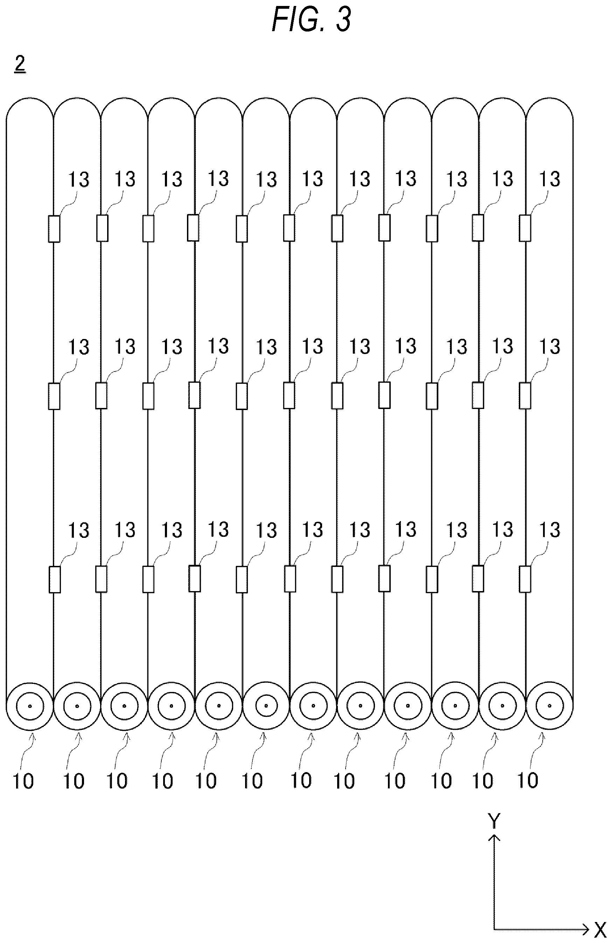

FIG. 3 is a diagram illustrating an example of a modification of the optical fiber ribbon according to the embodiment of the present disclosure. In FIG. 3, an extending direction of the optical fiber 10 is referred to as a Y direction, and a direction in which the plurality of optical fibers 10 are arranged is referred to as an X direction.

The optical fiber ribbon according to the embodiment of the present disclosure is not limited to the configuration illustrated in FIG. 1. For example, optical fibers adjacent to each other of the optical fiber ribbon may be intermittently bonded to each other. Specifically, in the optical fiber ribbon 2 according to the modification, the optical fibers 10 adjacent to each other are bonded by, for example, a plurality of bonding members 13 intermittently provided in a part of the Y direction instead of the coupling member 20 illustrated in FIG. 1, as illustrated in FIG. 3.

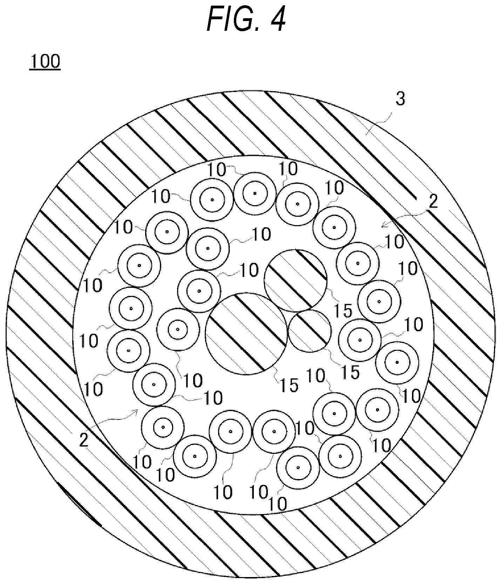

FIG. 4 is a diagram illustrating an example of an optical cable using the optical fiber ribbon 2 illustrated in FIG. 3. Referring to FIG. 4, an optical cable 100 includes, for example, two optical fiber ribbons 2 each including twelve optical fibers 10, a cable sheath 3 covering the two optical fiber ribbons 2, and a plurality of tensile strength members 15 in which aramid fibers and the like are assembled.

As described above, with the configuration in which the optical fibers 10 adjacent to each other are intermittently bonded to each other, the flexibility of the optical fiber ribbon 2 can be enhanced, and as illustrated in FIG. 4, even when the optical fiber ribbon 2 is rounded or bundled in a cross-sectional view, the transmission loss is not deteriorated, and therefore, the optical cable 100 accommodated at high density can be formed.

The plurality of optical fibers 10 adjacent to each other are not limited to the configuration in which the optical fibers are intermittently bonded to each other, and for example, the bonding member 13 may be provided over the entire Y direction illustrated in FIG. 3 between a part of the optical fibers. The optical cable 100 may not include the tensile strength member 15.

### (Second Modification)

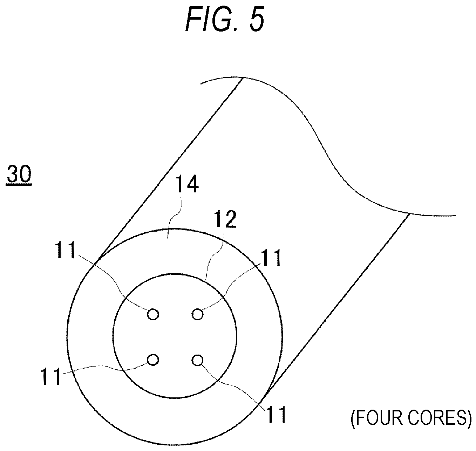

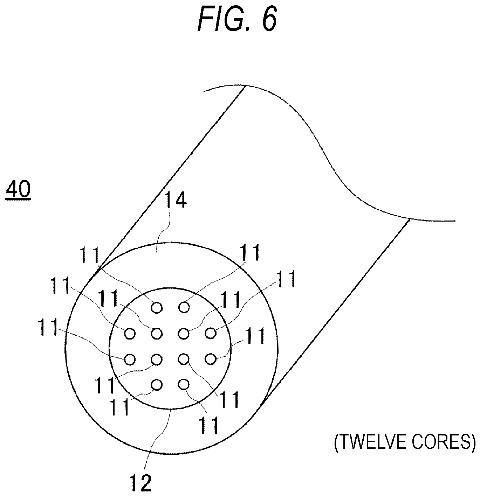

The optical fiber according to the embodiment of the present disclosure is not limited to SCF as illustrated in FIG. 2. FIGS. 5 and 6 are diagrams illustrating an example of a modification of the optical fiber according to the embodiment of the present disclosure. Referring to FIGS. 5 and 6, each of optical fibers 30 and 40 may include a plurality of cores 11, that is, may be multi-core fibers (MCF).

For example, the optical fiber 30 may include four cores 11 inside the cladding 12, as illustrated in FIG. 5. In addition, the optical fiber 40 may include twelve cores 11 inside the cladding 12, as illustrated in FIG. 6. In this manner, the optical fibers 30 and 40 are MCFs, so that the lengths of the cores 11 in the same optical fibers 30 and 40 are the same, and therefore, the difference in length of the cores can be reduced (to substantially zero) and the transmission amount can be increased. By forming an optical cable using the MCF, the core can be mounted at a higher density.

### (Third Modification)

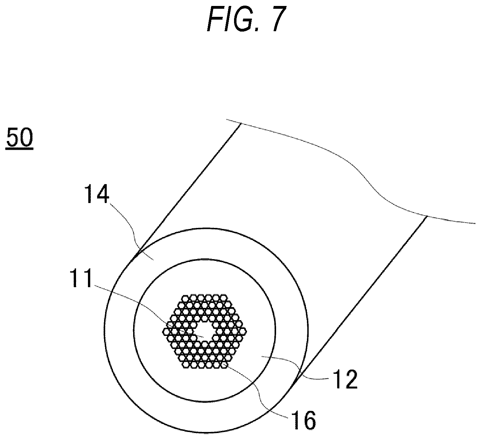

FIG. 7 is a diagram illustrating an example of another modification of the optical fiber according to the embodiment of the present disclosure. As illustrated in FIG. 7, the core 11 in the optical fiber 50 may be formed as a hollow core instead of being formed of pure quartz. FIG. 7 illustrates, as an example, a photonic band gap fiber (PBGF) in which holes 16 are regularly arranged around the core 11 which is a hollow core. In this manner, the transmission speed can be further increased by forming the core 11 as a hollow core.

### (Measurement on Difference in Light Transmission Time among Optical Fibers)

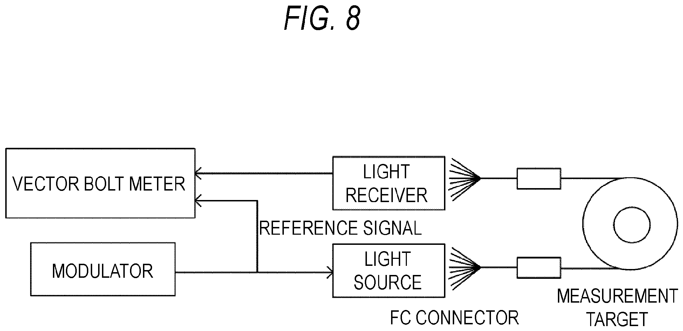

Next, a result of measuring a difference in light transmission time among optical fibers using the optical fiber of the optical fiber ribbon according to the embodiment of the present disclosure and an optical fiber according to a comparative example will be described. FIG. 8 is a diagram illustrating an outline of a measurement system used in the measurement. Hereinafter, the optical fiber ribbon or the optical fiber used for the measurement is also referred to as a "measurement target".

In the measurement system illustrated in FIG. 8, one end of the measurement target is connected to a light source that emits light having a wavelength of 1,550 nm via an FC connector, and the other end of the measurement target is connected to a light receiver via the FC connector. Further, the light source is connected to a modulator, and the light receiver is connected to a vector bolt meter. The modulator is electrically connected to the vector bolt meter and transmits a reference signal.

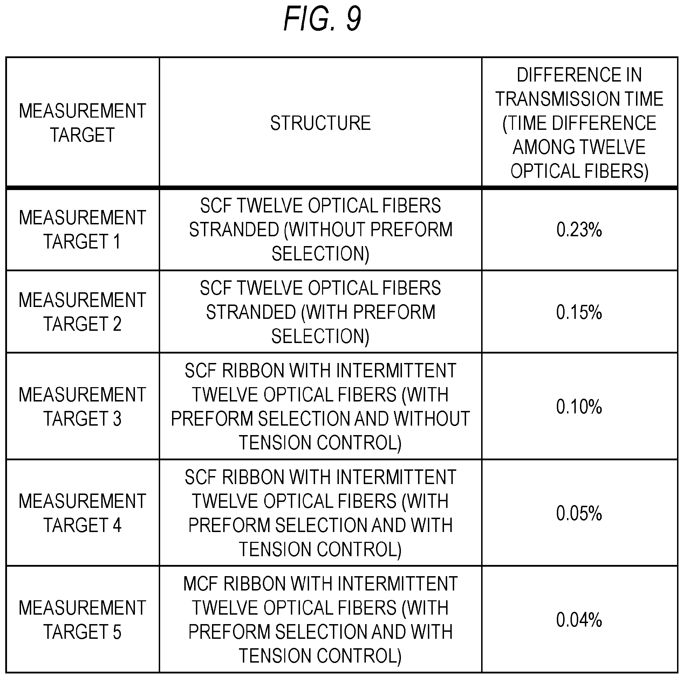

FIG. 9 is a diagram illustrating a list of measurement targets and measurement results of the measurement. In this measurement, measurement targets 1 to 5, which are measurement targets satisfying ITU-T G.652.D and G657.A1 standards, are used. Each of the measurement targets 1 to 5 includes twelve optical fibers, and a core included in each optical fiber is formed of pure quartz. The measurement target 1 and the measurement target 2 are the optical fiber according to the comparative example, and the measurement targets 3 to 5 are included in the optical fiber ribbon of the present disclosure.

More specifically, the measurement target 1 is an optical fiber obtained by stranding twelve optical fibers which are SCFs. A plurality of cores and cladding (hereinafter referred to as glass fibers) in the measurement target 1 are not selected at the time of formation from a preform. That is, at least two of the plurality of glass fibers are formed using different preforms. In the measurement target 1, a difference between a maximum value and a minimum value of the light transmission time in the twelve optical fibers is 0.23% of an average value of the light transmission time in the twelve optical fibers.

Similarly to the measurement target 1, the measurement target 2 is an optical fiber obtained by stranding twelve optical fibers which are SCFs. Unlike the measurement target 1, the plurality of glass fibers in the measurement target 2 are selected at the time of formation from the preform. That is, the plurality of glass fibers are formed using the same preform. In the measurement target 2, the difference between the maximum value and the minimum value of the light transmission time in the twelve optical fibers is 0.15% of the average value of the light transmission time in the optical fibers.

It is confirmed by comparing the measurement target 1 and the measurement target 2 that it is possible to reduce skew among the plurality of optical fibers by forming glass fibers in the respective optical fibers from the same preform.

The measurement target 3 is an optical fiber ribbon obtained by coupling, in parallel, twelve optical fibers which are SCFs as illustrated in FIG. 3. The plurality of optical fibers adjacent to each other are intermittently bonded as illustrated in FIG. 3. In addition, the plurality of glass fibers in the measurement target 3 are selected at the time of formation from the preform. The twelve optical fibers in the measurement target 3 are not subjected to the tension control for equalizing the tensions of the plurality of optical fibers when being formed as an optical fiber ribbon. In the measurement target 3, the difference between the maximum value and the minimum value of the light transmission time in the twelve optical fibers is 0.10% of the average value of the light transmission time in the optical fibers.

It is confirmed as compared with the measurement target 2 obtained by stranding twelve optical fibers that in the measurement target 3 adopting the form of the optical fiber ribbon including twelve optical fibers, it is possible to further reduce the skew among the optical fibers.

Similarly to the measurement target 3, the measurement target 4 is an optical fiber ribbon obtained by coupling, in parallel, twelve optical fibers which are SCFs. The optical fibers adjacent to each other are intermittently bonded. In addition, the plurality of glass fibers in the measurement target 4 are selected at the time of formation from the preform. Further, unlike the measurement target 3, the twelve optical fibers in the measurement target 4 are subjected to the tension control when being formed as an optical fiber ribbon. In the measurement target 4, the difference between the maximum value and the minimum value of the light transmission time in the twelve optical fibers is 0.05% of the average value of the light transmission time in the optical fibers.

It is confirmed by comparing the measurement target 3 and the measurement target 4 that it is possible to further reduce the skew among the optical fibers by subjecting the optical fibers to the tension control when being formed as an optical fiber ribbon.

The measurement target 5 is an optical fiber ribbon obtained by coupling, in parallel, twelve optical fibers which are MCFs each including four cores. The optical fibers adjacent to each other are intermittently bonded. In addition, the plurality of glass fibers in the measurement target 5 are selected at the time of formation from the preform. Further, the twelve optical fibers in the measurement target 5 are subjected to the tension control when being formed as an optical fiber ribbon. In the measurement target 5, the difference between the maximum value and the minimum value of the light transmission time in the plurality of cores included in the twelve optical fibers is 0.04% of the average value of the light transmission time in the plurality of cores.

It is confirmed by comparing the measurement target 4 and the measurement target 5 that the use of MCF can further reduce the skew among the optical fibers rather than the use of SCF. In addition, it is confirmed that in the measurement target 5, the skew among the plurality of cores in the same optical fiber is also reduced. In the case where the core included in each optical fiber is formed of the hollow core in FIG. 7 instead of pure quartz, the same result as in the case where the core of pure quartz is used is obtained.

The present disclosure has been described above based on the specific embodiment. However, the present disclosure is not limited to these exemplifications, but is indicated by the scope of claims, and is intended to include all modifications within a scope and meaning equivalent to the scope of claims.

### REFERENCE SIGNS LIST

1, 2 optical fiber ribbon
3 cable sheath
10, 30, 40, 50 optical fiber
11 core
12 cladding
13 bonding member
14 coating layer
15 tensile strength member
16 hole
20 coupling member
100 optical cable
D1 outer diameter of cladding
D2 outer diameter of optical fiber

## Claims

1. An optical fiber ribbon comprising:
a plurality of optical fibers each including a core and a cladding,
wherein the core is formed of pure quartz or formed as a hollow core,
the optical fibers arranged in parallel and adjacent to each other are coupled to each other, and
a difference between a maximum value and a minimum value of light transmission time in the plurality of optical fibers is 0.1% or less of an average value of the light transmission time in the optical fibers.

2. The optical fiber ribbon according to claim 1,
wherein the difference is 0.05% or less of the average value.

3. The optical fiber ribbon according to claim 1 or 2,
wherein the plurality of optical fibers adjacent to each other are intermittently bonded.

4. The optical fiber ribbon according to claim 1 or 2,
wherein each of the optical fibers includes a plurality of the cores.

5. The optical fiber ribbon according to claim 1 or 2,
wherein the optical fiber has an outer diameter of 200 µm or less, and
the cladding of the optical fiber has an outer diameter of 100 µm or less.
